Europäisches Patentamt

European Patent Office

Office européen des brevets

(19)

(11) Numéro de publication: **0 039 628**
**B1**

(12) **FASCICULE DE BREVET EUROPEEN**

(45) Date de publication du fascicule du brevet: **11.07.84**

(51) Int. Cl.³: **C 03 B 37/10, C 03 C 1/00**

(21) Numéro de dépôt: **81400628.4**

(22) Date de dépôt: **21.04.81**

(54) **Procédé et installation pour le traitement de déchets de fibres minérales de diverses natures.**

(30) Priorité: **21.04.80 DE 3015250**

(43) Date de publication de la demande:
**11.11.81 Bulletin 81/45**

(45) Mention de la délivrance du brevet:
**11.07.84 Bulletin 84/28**

(84) Etats contractants désignés:
**AT BE CH FR GB IT LI LU NL SE**

(56) Documents cités:
**GB - A - 1 489 797**
**US - A - 4 145 202**

(73) Titulaire: **ISOVER SAINT-GOBAIN**
**63 rue de Villiers**
**F-92209 Neuilly-sur-Seine (FR)**

(72) Inventeur: **Ganter, Arnold**
**3 Haupstrasse**
**D-6719 Obersuelzen (DE)**
Inventeur: **de Jonge, Arce**
**17 Lilienthalstrasse**
**D-6733 Hassloch (DE)**
Inventeur: **Lecron, Jacques**
**35 rue de Mont Jovet**
**F-73000 Bissy Chambery (FR)**

(74) Mandataire: **Eudes, Marcel et al,**
**Saint-Gobain Recherche 39 Quai Lucien Lefranc**
**F-93304 Aubervilliers Cedex (FR)**

Courier Press, Leamington Spa, England.

## Description

L'invention concerne un procédé de préparation de déchets de fibres minérales de diverses natures, en vue de leur réutilisation, dans lequel on concasse puis on broie les déchets qui peuvent au moins en partie se trouver sous forme de plaques, de rouleaux, etc., ainsi qu'une installation convenant particulièrement à la mise en oeuvre du procédé.

Dans la fabrication de matériaux isolants à base de fibres minérales destinés à la protection contre la chaleur, le froid, l'incendie et le bruit, on obtient non seulement des déchets de fabrication comme les chutes, mais aussi, en particulier au cours de changements de fabrication, des produits qui sortent des tolérances extrêmement étroites des spécifications et ne correspondent donc pas aux normes de qualité élevées fixées par l'usine. Ces chutes et rebuts divers sont difficiles à réutiliser et en pratique l'essentiel est mis en décharge ce qui crée des problèmes de stockage dont le grand volume spécifique de la matière fibreuse n'est pas la moindre cause. Ces problèmes de stockage peuvent aller jusqu'à entraver une extension en elle-même possible de la production du seul fait qu'on ne dispose pas de dépôts d'une capacité suffisante pour stocker économiquement les déchets ainsi accrus.

Par le brevet GB 1 489 797, on connaît certes déjà un procédé de traitement de ces déchets de fibres minérales qui vise à éviter les problèms de stockage décrits tout en permettant de réutiliser avec profit dans la production le produit obtenu. Ce procédé connu est fondé sur des considérations plus anciennes exposées par exemple dans le brevet US 3 847 664 et propose essentiellement de traiter tout d'abord les déchets dans un concasseur, de manière à fragmenter les plaques, blocs, etc., en particules assez petites pour se prêter à l'écoulement que l'on divise ensuite dans un broyeur fin, jusqu'à une grosseur moyenne de particules de 60 $\mu$m, ceci après les avoir stockées dans une trémie intermédiaire, ce qui permet de compenser les variations de marche du concasseur dans le temps. Après passage à travers le broyeur fin, les déchets finement divisés sont conduits à un silo, depuis lequel on peut, selon les besoins, les ajouter à la charge de matières premières proprement dite, destinée à la fusion.

Il est apparu, comme l'explique plus précisément le brevet GB 1 489 797 déjà cité, que la division très poussée du produit dans le broyeur fin peut éviter nombre des problèmes que pose l'incorporation des déchets dans la fusion; on arrive ainsi à ce que le bain digère ces déchets pour conduire à une fusion normale.

Toutefois, une difficulté notable réside dans le fait qu'en pratique, les déchets se présentent sous des formes variées de sorte que leur traitement ne donnera des résultats économiquement optimaux que dans la mesure où l'on pourra effectivement les traiter dans leur ensemble pour les réutiliser d'une matière ou d'une autre sans mettre à part de façon coûteuse, comme inutilisable pour telle fabrication, une fraction en général non négligeable pour laquelle le problème de la mise en décharge se poserait à nouveau.

Pour ce qui est de la refusion, opération qui se trouve au premier plan parmi les modes de récupération, cette question est déjà abordée dans le brevet GB 1 489 797 déjà cité, sous l'angle des difficultés rencontrées quant à la maîtrise de la teneur en carbone du bain lorsqu'on introduit les déchets dans le silo de composition en même temps que les matières premières usuelles. En effet, les déchets sont généralement formés, au moins en partie, de matière fibreuse minérale contenant jusqu'à 40% environ en poids d'un liant organique durci, formé par exemple de résine phénolique, dont la teneur en carbone va jusqu'à 60%, de sorte que leur teneur en carbone peut dépasser 20% en poids. Or la teneur en carbone du bain doit être inférieure à 1% en poids et il faut aussi la maintenir avec précision, car as variation peut modifier aussi bien la coloration du bain que sa température de fusion étant donné qu'elle fait varier les propriétés d'absorption de la chaleur.

Le procédé connu par le brevet GB 1 489 797 déjà cité, part de l'idée que les déchets ayant une certaine teneur en carbone, ils couvriront, s'ils sont régulièrement apportés dans la cuve de fusion, une partie, voire la totalité des besoins du bain en carbone, ce qui limite leur taux d'incorporation dans les matières premières à l'intérieur du silo de stockage de la composition. Si l'on veut dépasser la limite en question, on peut d'abord, pour ajuster la teneur en carbone du bain, ajouter des oxydants tels que le sulfate de sodium ou le nitrate de sodium qui chassent le carbone. Enfin, dans la mesure où cela nécessiterait des quantités économiquement prohibitives d'oxydant, une autre solution, dans ce procédé connu, consiste à brûler le liant carboné, dans un four de combustion prévu à cet effet entre le broyeur fin et le silo, afin de diminuer la teneur du produit en carbone avant de l'introduire dans le bain.

Toutefois, en pratique, les déchets que l'on recueille ne possédent pas une teneur uniforme en liant ou en carbone et l'on rassemble au contraire des déchets de natures diverses, dans des conteneurs à claire-voie qui sont dirigés tout à tour vers le concasseur, sans que l'on puisse tenir compte de la nature exacte de leur contenu, de sorte que la teneur en carbone des produits sortant de ce concasseur est sujette à des variations relativement grandes. Il faut donc vérifier régulièrement, par exemple toutes les heurs, la teneur en carbone du produit amené au bain, pour déterminer s'il est nécessaire de la corriger en ajoutant du carbone ou au contraire un oxydant. Etant donné que le four renferme quelques dizaines de tonnes qu'on tire en continu, il réagit extrêmement lentement à l'adjustement fin de la teneur par des additifs appropriés, de sorte que, si la teneur en carbone des déchets varie fortement, donc aussi les corrections, on ne parvient plus en fin de compte, à maintenir celle du bain entre les limites étroites désirées. Enfin, lorsque la teneur en carbone des déchets augmente soudainement, il faut pour en éliminer l'excès, mettre en marche le four de combustion, ce qui crée une nouvelle source d'oscillation de la teneur en carbone du produit délivré au bain, sans négliger le fait que cette combustion est difficile à régler et représente une consommation d'énergie supplémentaire.

En pratique, étant donné la nature continuellement variable des déchets, il faut encore tenir compte de ce que les variations en carbone proviennent non seulement du liant mais aussi, par exemple, de doublages en matières organiques telles que chlorure de poly-vinyle en feuilles, papier d'emballage, carton, carton ondulé ou autre et qu'en outre, d'autres corps étrangers se présentent en proportions éventuellement très variables, par exemple par suite de l'emploi de doublages en feuille d'aluminium ou en papier bitumé. Selon le mode de réutilisation des déchets, ces variations de leur teneur en tel ou tel corps étranger ont une importance très différente, une forte proportion d'un corps étranger déterminé ne posant pratiquement pas de problèmes dans un mode de réutilisation, tandis, que dans un autre, par exemple l'introduction dans le silo de mélange destiné au bain de fusion, elle peut créer de très grandes difficultés; cela vaut en particulier pour la teneur en carbone. Par suite, dans le procédé connu selon le brevet GB 1 489 797 déjà cité, et si l'on veut traiter les déchets en particulier en vue de modes de réutilisation différents, il faut compenser les variations des proportions de corps étrangers dans une mesure différente selon le mode de réutilisation, mais toujours de façon coûteuse, et ceci après avoir déterminé cas par cas la teneur du corps étranger éventuellement gênant pour prendre les contre-mesures nécessaires, ce qui au moins par suite de considérations économiques, restreint notablement les possibilités de retraitement selon ce procédé.

Au contraire, l'invention a pour but de fournir un procédé qui permette d'éliminer ou du moins de réduire largement les variations des proportions de corps étrangers dans les déchets, en particulier pour l'alimentation d'un bain de fusion, ainsi qu'une installation appropriée à sa mise en oeuvre.

L'invention repose sur l'idée que ce ne sont pas les proportions de corps étrangers en elles-mêmes, mais bien leurs variations, qui sont la cause principale des difficultés de traitement des déchets. Si l'on obtenait exclusivement des déchets d'un nature quelconque, mais connue et constante, on pourrait prendre des mesures pour éliminer ou compenser de façon relativement simple, les proportions indésirables de corps étrangers et réaliser à cet effet une installation continue fonctionnant toujours de la même façon.

Selon l'invention, et dans le cadre du procédé précité, on homogénéise les déchets avant le broyage fin en mélangeant continuellement des déchets amenés à des périodes différentes, le mélange avec homogénéisation s'effectuant au cours d'un stockage intermédiaire des déchets, après fragmentation des déchets.

Grâce à cette homogénéisation, on peut arriver à approcher presque complètement de l'état idéal dans lequel on recevrait seulement des déchets de nature constante en s'affranchissant des variations, même prononcées, des proportions de corps étrangers, en particulier de la teneur en carbone, qui peuvent exister par exemple d'un conteneur à un autre, pour atteindre une moyenne correspondant à un nombre plus ou moins grand de conteneurs. Il en résulte, par exemple dans le cas de réutilisation comme partie de la matière première du bain, que les variations des teneurs en corps etrangers, en particulier en carbone du produit arrivant à l'entrée de la cuve du four, se réduisent de façon notable et, s'étalant dans le temps, apparaissent plus graduellement, de sorte que, malgré l'inertie du bain, on s'aperçoit qu'il est possible de les neutraliser au moyen d'additifs avec une précision suffisante. Fréquemment, dans la pratique, ainsi que dans le cadre de la présente description, c'est l'homogénéisation de la teneur en carbone des déchets destinés au bain que joue le rôle primordial, mais il est claire que l'on uniformise aussi toutes les autres proportions de corps étrangers, qu'il devient possible de corriger simplement de façon toujours constante, ou avec seulement une variation très graduelle, en tout cas de façon dosable.

L'effet d'homogénéisation est d'autant plus important que la quantité de déchets brassée est plus grande. Du fait du stockage intermédiaire des déchets pour un brassage d'homogénéisation, l'avantage d'une quantité stockée relativement grande est en outre que, même s'il se produit de fortes variations des quantités de déchets introduites dans le concasseur, on peut extraire ceux-ci en continu pour les amener au broyeur fin, par exemple un broyeur à boulets, de sorte que celui-ci peut fonctionner en continu dans les meilleures conditions.

On peut obtenir une homogénéisation supplémentaire des proportions de corps étrangers si l'on sépare les grains trop gros des déchets issus du broyage fin pour les ramener au broyage avec des déchets frais. Ceci contribue aussi à obtenir en fin de compte un brassage entre déchets amenés plus tôt et déchets amenés plus tard, donc à compenser les variations éventuelles de la teneur en corps étrangers. S'y ajoute l'avantage de faire que les déchets sortant du broyeur fin donnent effectivement pour alimenter le bain un produit d'une grande finesse, ce qui est apparu, sinon nécessaire, du moins avantageux en ce qui concerne leur digestion par le bain.

Pour mettre en oeuvre le procédé, l'invention propose une installation comportant au moins un concasseur, un broyeur fin et un silo intermédiaire à déchets disposé à la suite du concasseur, le silo possédant des organes de mélange des déchets amenés plus tard aux dechets amenés plus tôt.

En principe, il existe un grand nombre de possibilités de construction d'un tel silo intermédiaire, où le brassage peut être provoqué par exemple mécaniquement au moyen d'un agitateur, par introduction d'air comprimé dans une couche fluidisée ou de façon similaire. Le mélange peut aussi être créé par un recyclage des déchets analogue à celui mentionné plus haut, ou aussi et mieux encore, en plus par utilisation d'un silo formé de multiples réservoirs entre lesquels un échange de matière s'effectue par des transferts dirigés. Toutefois, une installation particulièrement avantageuse en ce que concerne l'appareillage, son coût de construction et le degré de brassage est caractérisée par un silo formé de multiples réservoirs équipés d'organes d'alimentation, de préférence communs, capables d'amener tour à tour les déchets à chacun de ces réservoirs et d'organes de reprise, de préférence aussi communs, au moyen desquels on peut évacuer les déchets des divers réservoirs, dans un ordre différent de celui de leur arrivée, en particulier de façon simultanée. Du fait que l'ordre d'alimentation des divers réservoirs et leur ordre d'extraction diffèrent, le mélange désiré s'obtient sans aucune espèce de mécanisme de brassage interne, selon le principe en lui-même connu des silos à laine. La simplicité de constitution et les faibles sollicitations mécaniques des éléments d'un tel silo réduisent en outre les risques de panne et la consommation d'énergie.

D'autres détails, caractéristiques et avantages de l'invention ressortent de la description donnée ci-après d'un mode d'exécution, en référence aux dessins, sur lesquels:

— la figure 1 formée de deux moitiés 1a et 1b raccordées selon le traite mixte consitue un schéma de l'ensemble d'une installation de traitement selon l'invention, la moitié gauche la montrant la partie amont de cette installation, et la figure 1b sa partie aval,
— la figure 2 est une vue agrandie des organes d'extraction de l'un des compartiments du silo.

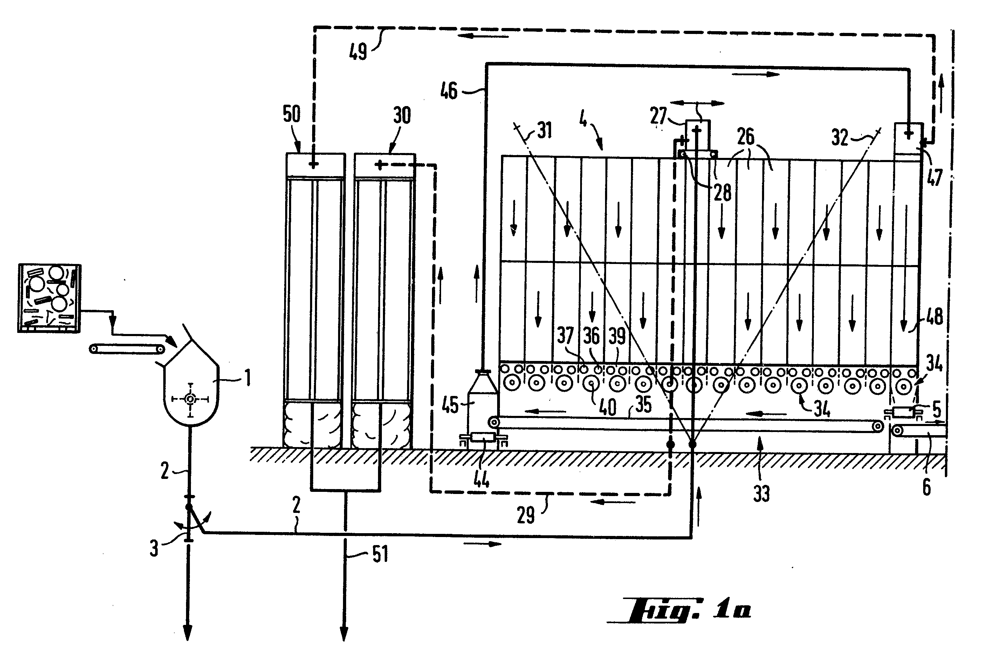

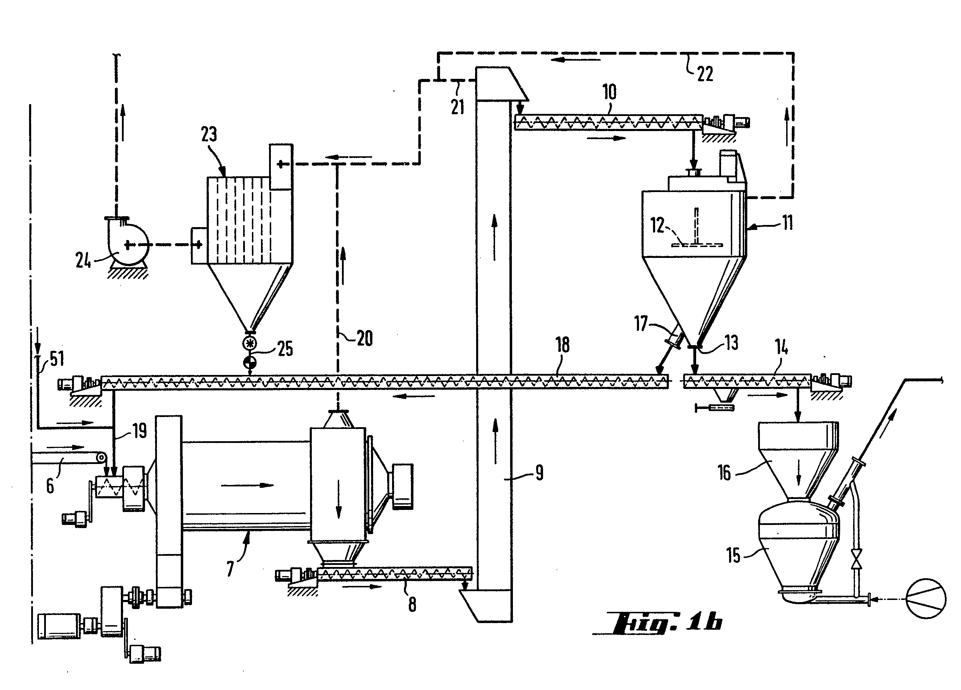

Comme on le voit par la figure 1, des déchets, livrés par exemple irrégulièrement, dans des conteneurs à claire-voie sous forme de plaques, balles, etc., sont introduits par une courroie transporteuse dans un concasseur 1 qui sera, par exemple, un broyeur à marteaux. Le concasseur 1 réduit ces déchets en flocons qui tombent à travers une grille présentant des ouvertures d'un ordre de grandeur de 20 mm. Ces déchets arrivent secs dans une conduite pneumatique de transport 2 où existe, d'une façon expliquée plus précisément par la suite, un courant d'aspiration d'air. Au moyen d'un aiguillage de tubes 3, on peut effecteur au besoin une dérivation, si les déchets divisés doivent être conduits vers d'autres utilisations.

Normalement la conduite de transport 2 transporte les déchets jusqu'à un silo intermédiaire désigné par la référence générale 4, d'où après stockage intermédiaire, ils sont transportés, par des courroies transporteuses 5 et 6, jusqu'à un broyeur fin 7, ici un broyeur à boulots, qui les réduit en grains dont 95 à 98% environ ont une grosseur inférieure à 50 $\mu$m. Du broyeur 7, les déchets finement broyés sont conduits par une vis d'extraction 8 à un élévateur à godets 9, puis par une vis d'amenée 10, un séparateur 11. En l'occurrence, ce séparateur est pneumatique et comprend de manière connue en soi, un plateau de dispersion tournant 12, coopérant avec des déflecteurs non représentés plus précisément et un courant d'air dirigé vers le haut sur le pourtour du plateau. Les grains de matière ne dépassant pas, par exemple, une grosseur de 50 $\mu$m, parviennent, par une sortie 13, à une vis transporteuse 14, qui les emporte en continu vers un transporteur pneumatique à fonctionnement intermittent 15, muni d'un trémie d'alimentation 16. Ce transporteur les transfère de façon intermitente au silo de composition non représenté tandis que, par une sortie 17 du séparateur 11, les grains grossiers supérieurs à 50 $\mu$m parviennent à une vis de recyclage 18, qui les ramène selon la flèche 19, à l'entrée du broyeur fin 7.

La poussière est extraite de la région du broyeur fin 7, de l'élévateur à godets 9 et du séparateur il et conduite par des gaînes de dépoussiérage 20, 21 et 22, indiqué en tireté à un dépoussiéreur central 23 d'un type en soi connu, dont l'aspiration est entretenue au moyen d'un ventilateur 24, disposé derrière lui. Du dépoussièreur 23, la poussière séparée de l'air de transport est amenée par une conduite 25 à la vis de recyclage 18, et, par le tuyau 19, à nouveau au broyeur fin 7, jusqu'à ce que finalement, elle parvienne au transporteur pneumatique 15. On pourrait aussi imaginer d'amener directement la poussière de la conduite 25 à la trémie 16 du transporteur pneumatique 15.

Le silo intermédiaire 4 n'a pas pour seul rôle de permettre, malgré l'arrivée discontinue de déchets en flocons venant du concasseur 1, une extraction continue par les courroies transporteuses 5 et 6, vers le broyeur fin 7, de sorte que celui-ci, un broyeur à boulets, peut fonctionner en continu: il a aussi pour rôle essentiel, de mélanger les déchets amenés du concasseur 1 à des déchets amenés plus tôt. Par suite, les différences de composition des déchets sont égalisées, en particulier en ce que concerne la teneur en carbone due au liant qu'ils renferment en quantité plus ou moins grande. En effet, même lorsque cette teneur en carbone varie fortement d'un conteneur à l'autre, on retrouve sur les courroies transporteuses 5 et 6 un mélange de déchets qui présente à peu près la moyenne de plusieurs conteneurs et qui, par conséquent, subit des fluctuations notablement moindres dans sa composition. On verra plus précisément ci-après de quelle manière ce résultat est atteint dans le silo 4.

Le silo 4 est compartimenté en un nombre suffisant de réservoirs verticaux 26 formant cheminée, quinze dans l'exemple, qui sont alimentés par le haut en déchets en flocons arrivant de la conduite de transport 2. Pour alimenter les différents réservoirs est prévu en chariot d'alimentation 27, qui peut rouler de l'un à l'autre, en haut de ceux-ci, par exemple sur des roues 28 et des rails non représentés plus spécialement. De façon non représentée en détail, le chariot d'alimentation comporte un ventilateur d'aspiration qui sert à entretenir le courant d'air de transport dans la conduite de transport 2, et selon le principe connu des silos à laine, il est équipé, en amont du ventilateur par rapport à l'écoulement, d'un tambour tamiseur tournant, sur l'extérieur duquel les déchets en flocons se déposent; ainsi séparès du courant d'air aspiré, ces déchets sont introduits dans les réservoirs respectifs 26, sous le chariot d'alimentation 27, au moyen d'une racle appropriée, sous une forme convenablement tassée, renfermant donc notablement moins d'inclusions d'air. La poussière qui traverse le tambour tamiseur est entraînée avec l'air qui sort du ventilateur, à travers une conduite de dépoussiérage 29 indiquée en tireté, vers un filtre de depoussiérage du silo approprié 30.

En service, le chariot d'alimentation 27 qui sépare les flocons de l'air de transport se déplace au-dessus du silo 4, alimenté de la façon figurée par les traits mixtes 31 et 32. Tout d'abord, le réservoir placé à l'extrême gauche, par exemple, correspondant à la ligne 31, est chargé de déchets jusqu'à ce qu'une hauteur de remplissage désirée soit atteinte ou même qu'il soit complètement rempli. Alors, le chariot d'alimentation 27 poursuit son trajet jusqu'au réservoir 26 voisin et ainsi de suite jusqu'à ce qu'il soit arrivé, à droite, au dernier des réservoirs 26, correspondant à la ligne 32. Le contenu total du silo intermédiaire 4 se compose ainsi de déchets arrivés pendant un laps de temps prolongé.

Comme on le voit sans peine, les déchets débités en premier lieu par le concasseur 1 se trouvent alors dans les réservoirs 26 de gauche, tandis que dans ceux de droite se trouvent des déchets amenés plus récemment par la conduite de transport 2.

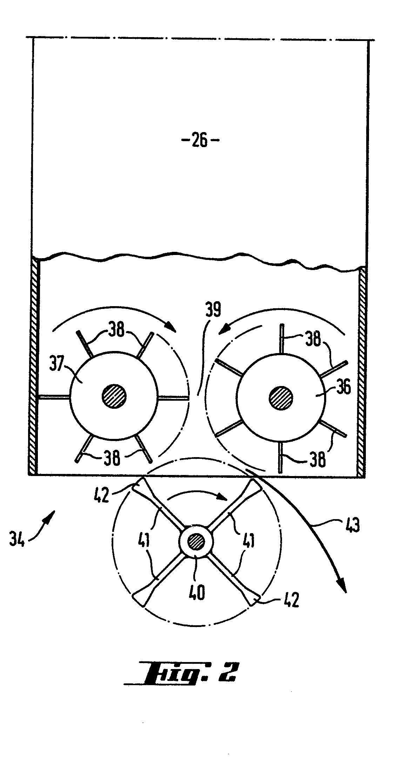

En dessous des réservoirs 26 sont prèvus des organes de reprise désignés par la référence générale 33 et qui sont formés de systèmes d'extraction 34 adjoints à chacun des réservoirs 26 et d'au moins une courroie transporteuse 35. La partie inférieure d'un réservoir 26 et les systèmes d'extraction 34 correspondants sont représentés à plus grande échelle sur la figure 2. A la différence des silos à laine euxmêmes connus ayant un principe de fonctionnement analogue, les parois inférieures de chaque réservoir 26 ne présentent aucun rétrécissement ou autre, mais sont entièrement verticales, comme on le voit par la figure 2. Chaque organe d'extraction 34 se compose de deux rouleaux extracteurs 36 et 37, qui présentent sur leur circonférence plusieurs ailettes radiales 38 et sont entraînés en sens opposés. Entre ces deux rouleaux reste un interstice de passage 39, à travers lequel les ailettes 38 peuvent entraîner des déchets vers le bas. L'interstice de passage 39 est barré dans le bas par un rouleau batteur 40, muni de battoirs 41, qui présentent à leurs extrémités des parties terminales en forme de pale 42. Les deux rouleaux extracteurs 36 et 37 et le rouleau batteur 40 ferment ainsi presque complètement la section inférieure du réservoir 26, de forme allongée perpendiculairement au plan du dessin. Les déchets en flocons venant de l'interstice de passage 39 entre les rouleaux extracteurs 36 et 37 sont saisis par les battoirs 41 du rouleau batteur 40 et déversés sous forme meuble sur la courroie transporteuse 35, suivant la flèche 43 de la figure 2.

En général, tous les systèmes d'extraction 34 des différents réservoirs 26 fonctionnent simultanément et, ainsi, ils extraient en continu, des déchets de chacun d'eux pour les faire tomber sur la courroie transporteuse 35 que recouvrent donc, on le voir sand peine, des couches venant de tous les réservoirs 26. Compte tenu du fait que ces derniers sont alimentés avec décalage dans le temps, on obtient ainsi un mélange constant des déchets arrivés à différentes périodes, ce qui homogénéise le produit et uniformise ses teneurs en liant et en carbone. Si, maintenant, tous les sytèmes d'extraction 34 sont mis en action simultanément, il y a sur la courroie transporteuse 35—après une courte phase de démarrage—jusqu'à quinze couches de déchets correspondant au nombre de réservoirs 26, qui s'interpénétrent déjà partiellement, de sortie qu'une section du transporteur contient de la matière provenant par exemple de quatorze conteneurs à claire-voie différents, puisque ces derniers contiennent dans le cas présent environ 5 $m^3$ de déchets chacun, le silo 4 ayant un volume total d'environ 75 $m^3$, qui correspond à une capacité de l'ordre de 250 kg de flocons par réservoir, soit 3, 6 t environ pour l'ensemble du silo. Ainsi, si le concasseur 1 a un débit d'environ 500 kg/h, il est possible économiquement, en travaillant en deux postes, de traiter par jour environ 7,5 t de déchets, à raison donc de deux renouvellements journaliers, le broyeur fin 7 devant bien entendu être conçu pour un débit au moins égal. A de tels débits, la pratiquement a montré que l'on peut obtenir après broyage fin un produit homogénéisé, dont la teneur en carbone varie seulement entre 4 et 5%.

A ce propos, il faut encore souligner qu'avec l'installation selon l'invention, contairement au brevet GB 1 489 797 déjà cité, il est même possible de traiter une certaine quantité de déchets de fibres minérales contenant du liant non durci. Ainsi sur un débit journalier d'environ 7,5 t de déchets, indiqué à titre d'exemple, on peut introduire au fur et à mesure dans le concasseur, de façon convenablement dosée, environ 400 à 500 kg de déchets de fibres minérales contenant du liant non durci, sans recontrer de difficultés ni produire de collages.

Dans le mode d'exécution représenté, les déchets qui se trouvent déjà l'état mélangé sur la courroie transporteuse 35—comme indiqué plus haut—sont transportés vers la gauche et déversés sur un transporteur 44, qui les conduit jusqu'à une hotte 45 alimentant une conduite 46 de transfert vers la tête d'alimentation d'un silo de sortie supplémentaire 48 jouant un rôle de tampon. Comme le chariot d'alimentation 27, la tête d'alimentation 47 est munie d'un ventilateur aspirant pour engendrer un courant d'air de transport dans la conduite de transfert 46 et d'un tambour tamiseur pour séparer et comprimer les déchets amenés. La poussière qui traverse le tambour tamiseur de la tête d'alimentation 47 avec l'air de transport est conduite, par une gaine de dépoussiérage 49, à un dépoussiéreur 50. La poussière venant des conduites de dépoussiérage 29 et 49 et recueille dans les dépoussiéreurs 30 et 50, peut être amenée au broyeur fin 7 par une conduite d'alimentation indiquée en 51, de sorte que toute possière se présentant dans l'ensemble de l'installation est aspirée et également conduite à la récupération. Toutefois, la poussière venant des dépoussiéres 30 et 50 peut aussi commodément être mise en sacs et transportée manuellement au broyeur fin 7 ou à la trémie 16 du transporteur pneumatique 15.

Dans le cas de l'exemple, le silo d'extraction 48 a exactement la même constitution que chaque réservoir 26 et est muni, dans le bas, d'un organe d'extraction semblable 34. Par l'organe d'extraction 34, les déchets mélangés arrivent du silo d'extraction 48 sur la courroie transporteuse 5, puis sur la courroie transporteuse 6 et finalement parviennent au broyeur fin 7. La vitesse de rotation des rouleaux 36, 37, et 40 des organes d'extraction 34, ainsi que la vitesse de course des courroies transporteuses 35, 44, 5 et 6 sont commandées d'une façon appropriée, mais qu'il est inutile de décrire en détail par des cellules photoélectriques dans la région des courroies tarnsporteuses, et des palpeurs de niveau de remplissage dans les silos, pour assurer une extraction continue sans perturbation ni phénomènes d'obstruction.

L'alimentation du broyeur fin 7 par le dépoussiéreur central 23, ainsi que par les dépoussiéreurs 30 et 50 et en particulier par la sortie 17 du séparateur 11 des fractions grossières, assure un brassage supplémentaire entre des déchets amenés plus tôt et des déchets amenés plus tard et donc une homogénéisation encore plus poussée pour conférer au produit délivré une teneur moyenne régulière en carbone, obtenue sur un nombre plus ou moins grand de conteneurs à clairevoie, dont le contenu est amené au concasseur 1. Ainsi, le bain reçoit des déchets ayant une grosseur de particules et une teneur en carbone très uniformes, de sorte que l'on est certain que ces déchets sont parfaitement digérés par lui et qu'il est possible malgré son inertie, d'ajuster avec précision la teneur en carbone. La régulation de la teneur en carbone n'est pas seulement facilitée par le fait que l'importance des fluctuations de la teneur en carbone du produit est diminuée très notablement, mais, en outre, par le fait que ses variations, correspondant à une augmentation ou à une diminution de la moyenne sur les silos 26, n'apparaissent que graduellement, suivant une courbe douce et aplatie.

**Revendications**

1. Procédé de traitement de déchets de fibres minérales, en vue de leur réutilisation, dans lequel on concasse puis on broie finement ces déchets, caractérisé en ce qu'on les homogénéise avant le broyage fin en mélangeant continuellement des déchets amenés à des périodes différentes et en ce que le mélage avec homogénéisation s'effectue au cours d'un stockage intermédiaire des déchets, après fragmentation des déchets.

2. Procédé selon la revendication 1, caractérisé en ce qu'après le mélange, on extrait en continu les déchets stockés.

3. Procédé selon l'une des revendication 1 ou 2, caractérisé en ce que, pour mieux homogéniser, on sépare des déchets finement broyés les grains trop gros que l'on ramène au broyage avec des déchets frais.

4. Installation pour la mise en oeuvre du procédé selon l'une des revendications 1 à 3, comportant au moins un concasseur, un broyeur fin et un silo disposé à la suite du concasseur, caractérisée en ce que le silo (4) possède des organes de mélange des déchets amenés plus tard aux déchets amenés plus tôt.

5. Installation selon la revendication 4, caractérisée en ce que le silo (4) est formé de multiples réservoirs (26) équipés d'organes d'alimentation (conduite de transport (2), chariots d'alimentation (27)) capables d'amener successivement les déchets à chacun de ces réservoirs et d'organes de reprise (33) au moyen desquels on peut évacuer les déchets des divers réservoirs dans un ordre différent de celui de leur arrivée, en particulier de façon simultanée.

6. Installation selon la revendication 5, caractérisée en ce que les réservoirs (26) ont la forme de cheminées à parois au moins approximativement parallèles.

7. Installation selon l'une des revendications 5 et 6, caractérisée en ce que le long de la partie supérieure ouverte du silo (4) peut rouler un chariot d'alimentation (27), raccordé au concasseur (1), en particulier par une conduite pneumatique de transport (2).

8. Installation selon la revendication 7, caractérisée en ce que le chariot d'alimentation (27) est équipé d'un ventilateur relié à la conduite de transport (2) ventilateur précédé d'un sérparateur arrêtant les déchets apportés par l'air.

9. Installation selon l'une des revendications 7 et 8, caractérisée en ce qu'au chariot d'alimentation (27) fait suite une conduite de dépoussiérage (29) évacuant la poussière entraînée part l'air vers un dépoussiéreur (30).

10. Installation selon l'une des revendications 5 à 9, caractérisée en ce qu'en bas de chaque réservoir (26) sont disposés des systèmes d'extraction tournants (34) faisant partie des organes de reprise (33).

11. Installation selon la revendication 10, caractérisée en ce que, les systèmes d'extraction (34) comprennent un rouleau batteur central (47) et, symétriquement, au dessus de celui-ci, au moins deux rouleaux extracteurs (36), (37).

12. Installation selon l'une des revendications 10 et 11, caractérisée en ce que les réservoirs (26) sont alignés au dessus d'une courroie transporteuse (35), au moins, servant à évacuer conjointement les déchets qui en sont extraits.

13. Installation selon l'une des revendications 5 à 12, caractérisée en ce qu'elle comprend un silo de sortie séparé (48) qui peut être alimenté en déchets évacués conjointement des différents silos (26) par les organes de reprise (33).

**Patentansprüche**

1. Verfahren zur Aufbereitung von Mineralfaserschrott, insbesondere zu seiner Wiederverwendung, bei dem das Schrottmaterial vorzerkleinert und gemahlen wird, dadurch gekennzeichnet, daß das Schrottmaterial vor dem Feinmahlen durch kontinuierliches Mischen mit zu unterschiedlichen Zeitpunkten aufgegebenem Schrottmaterial homogenisiert wird und daß die homogenisierende Vermischung im Zuge einer Zwischenspeicherung des Schrottmaterials nach Zerkleinerung des Schrottmaterials durchgeführt wird.

2. Verfahren nach Ánspruch 1, dadurch gekennzeichnet, daß das gespeicherte Schrottmaterial nach Vermischung kontinuierlich ausgetragen wird.

3. Verfahren nach Anspruch 1 oder 2, dadurch gekennzeichnet, daß zur besseren Homogenisierung aus dem feingemahlenen Schrottmaterial Überkorngrößen abgeschieden und zur erneuten Mahlung zusammen mit frischem Schrottmaterial zurückgeführt werden.

4. Einrichtung zur Durchführung des Verfahrens nach wenigstens einem der Ansprüche 1 bis 3, mit wenigstens einer Grobmühle und wenigstens einer Feinmühle sowie wenigstens einem hinter der Grobmühle angeordneten Zwischenspeicher, dadurch gekennzeichnet, daß der Zwischenspeicher (4) eine Einrichtung zum Vermischen von später aufgegebenem Schrottmaterial mit früher aufgegebenem Schrottmaterial aufweist.

5. Einrichtung nach Anspruch 4, dadurch gekennzeichnet, daß der Zwischenspeicher (4) aus einer Mehrzahl einzelner Silos (26) besteht, denen eine Aufgabeeinrichtung (Förderleitung 2, Beschickungswagen 27) zugeordnet ist, mit welcher das Schrottmaterial jedem dieser Silos und Abzugseinrichtungen (33) in zeitlicher Aufeinanderfolge nacheinander zuführbar ist, mit denen das Schrottmaterial aus einer Mehrzahl von Silos in gegenüber der Materialaufgabe unterschiedlicher zeitlicher Folge, insbesondere gleichzeitig entnehmbar ist.

6. Einrichtung nach Anspruch 5, dadurch gekennzeichnet, daß die Silos (26) als parallele Schächte mit wenigstens annähernd parallelen Schachtwänden ausgebildet sind.

7. Einrichtung nach Anspruch 5 oder 6, dadurch gekennzeichnet, daß entlang der offenen Oberseite des Silos (4) ein Beschickungswagen (27) verfahrbar ist, der mit der Grobmühle (1) insbesondere über eine pneumatische Förderleitung (2) verbunden ist.

8. Einrichtung nach Anspruch 7, dadurch gekennzeichnet, daß der Beschickungswagen (27) ein Gebläse aufweist, welches mit der Förderleitung (2) verbunden ist, wobei vor dem Gebläse ein Abscheider zum Zurückhalten des in der Luft mitgeführten Schrottmaterials angeordnet ist.

9. Einrichtung nach Anspruch 7 oder 8, dadurch gekennzeichnet, daß an dem Beschickungswagen (27) eine Entstaubungsleitung (29) zur Abführung von in der Luft mitgeführtem Staub zu einer Entstaubungseinrichtung (30) angeschlossen ist.

10. Einrichtung nach einem der Ansprüche 5 bis 9, dadurch gekennzeichnet, daß an der Unterseite jedes Silos (26) rotierende Austragsorgane (34) als Teil einer Abzugseinrichtung (33) angeordnet sind.

11. Einrichtung nach Anspruch 10, dadurch gekennzeichnet, daß die Austragsorgane (34) eine mittlere Schlägerwalze (47) und symmetrisch hierzu oberhalb dieser wenigstens zwei Austragswalzen (36, 37) aufweisen.

12. Einrichtung nach Anspruch 10 oder 11, dadurch gekennzeichnet, daß unterhalb der Silos (26) wenigstens ein Förderband (35) zum gemeinsamen Abfördern des aus den Silos (26) ausgetragenen Schrottmaterials vorgesehen ist.

13. Einrichtung nach einem der Ansprüche 5 bis 12, dadurch gekennzeichnet, daß ein separates Abzugssilo (48) vorgesehen ist, welches mit dem von der Abzugseinrichtung (33) aus den einzelnen Silos (26) gemeinsam abgezogenen Schrottmaterial beschickbar ist.

## Claims

1. Process for treating mineral fibre waste, with a view to re-using it, in which the waste is crushed and then finely ground, characterised in that it is homogenised before being finely crushed by mixing continuously waste taken at different periods and in that mixing with homogenisation takes place during the course of intermediate storage of the waste after fragmentation thereof.

2. Process according to claim 1, characterised in that after mixing, the stored waste is continuously extracted.

3. Process according to either one of claims 1 or 2, characterised in that, to improve homogenisation, excessively large particles, which are returned to the crushing step with fresh waste, are separated from the finely crushed waste.

4. Apparatus for carrying out the process according to any one of claims 1 to 3, including at least one crusher, a fine grinder, and a silo arranged following the crusher, characterised in that the silo (4) has means for mixing waste introduced later with waste which has been introduced earlier.

5. Apparatus according to claim 4, characterised in that the silo (4) is formed from multiple reservoirs (26) provided with feed means (transport conduit (2). supply carriages (27)) capable of successively conducting waste to each of these reservoirs and extracting means (33) by means of which waste may be withdrawn from the various reservoirs in an order different from that of their arrival, especially simultaneously.

6. Apparatus according to claim 5, characterised in that the reservoirs (26) are in the form of chimneys with approximately parallel walls.

7. Apparatus according to either one of claims 5 and 6, characterised in that along the upper open part of the silo (4) may travel a supply carriage (27) connected to the crusher (1), in particular by a pneumatic transport conduit (2).

8. Apparatus according to claim 7, characterised in that the supply carriage (27) is provided with a fan connected to the transport conduit (2), the fan being preceded by a separator for intercepting airborne waste.

9. Apparatus according to either one of claims 7 or 8, characterised in that following the supply carriage (27) is a dust-removing conduit (29) for removing to a dust collector (30) the dust carried by the air.

10. Apparatus according to any one of claims 5 to 9, characterised in that at the bottom of each reservoir (26) are disposed rotating extracting systems (34) forming part of the extraction means (33).

11. Apparatus according to claim 10, characterised in that the extraction systems (34) include a central roller-beater (47) and, symmetrically above the latter, at least two roller extractors (36) (37).

12. Apparatus according to either one of claims 10 or 11, characterised in that the reservoirs (26) are aligned above at least one conveyor belt (35), to remove conjointly waste which is extracted.

13. Apparatus according to any one of claims 5 to 12, characterised in that it includes a separate outlet silo (48) which can be supplied with waste which has been removed conjointly from the various silos (26) by the extracting means (33).

Fig. 1a

0 039 628

Fig. 1b

_Fig. 2_